# EUROPEAN PATENT SPECIFICATION

(11) **EP 1 190 290 B1**
(45) Date of publication and mention of the grant of the patent: **16.09.2009**
(21) Application number: 00931420.4
(22) Date of filing: 25.05.2000
(51) Int. Cl.: G06F 21/00

(54) **SYSTEM FOR DIGITALLY SIGNING A DOCUMENT**
SYSTEM ZUM DIGITALEN UNTERSCHREIBEN VON EINEM DOKUMENT
SYSTEME FIABLE POUR LA SIGNATURE NUMERIQUE D'UN DOCUMENT

(30) Priority: 28.05.1999 EP 99304164
(43) Date of publication of application: 27.03.2002
(73) Proprietor: Hewlett-Packard Company (a Delaware Corporation), Palo Alto CA 94304 (US)
(72) Inventor: PROUDLER, Graeme, John, Stoke Gifford, Bristol BS34 8XQ (GB); BALACHEFF, Boris, Hotwells, Bristol BS8 4LT (GB); CHEN, Liqun, Bradley Stoke Bristol BS32 9DQ (GB)
(74) Representative: Lawrence, Richard Anthony
(86) International application number: PCT/GB2000/001996
(87) International publication number: WO 2000/073879

(56) References cited:
- EP-A- 0 386 867
- EP-A- 0 717 337
- WO-A-94/01821
- US-A- 5 907 619
- WOO T Y C ET AL: "AUTHENTICATION FOR DISTRIBUTED SYSTEMS" COMPUTER,US,IEEE COMPUTER SOCIETY, LONG BEACH., CA, US, vol. 25, no. 1, 1 January 1992 (1992-01-01), pages 39-52, XP000287833 ISSN: 0018-9162
- WISEMAN S ET AL: "THE TRUSTED PATH BETWEEN SMITE AND THE USER" PROCEEDINGS OF THE SYMPOSIUM ON SECURITY AND PRIVACY,US,WASHINGTON, IEEE COMP. SOC. PRESS, vol. -, 1988, pages 147-155, XP000011725
- BERGER J L ET AL: "COMPARTMENTED MODE WORKSTATION: PROTOTYPE HIGHLIGHTS" IEEE TRANSACTIONS ON SOFTWARE ENGINEERING,US,IEEE INC. NEW YORK, vol. 16, no. 6, 1 June 1990 (1990-06-01), pages 608-618, XP000128949 ISSN: 0098-5589

## Description

### Technical Field

The present invention relates to apparatus and methods for digitally signing image data, and in particular documents, in a manner which provides a high level of confidence to a signing party that the document they think they are signing is in fact the document they are signing.

### Background Art

Conventional prior art mass market computing platforms include the well-known personal computer (PC) and competing products such as the Apple Macintosh^{™}, and a proliferation of known palm-top and laptop personal computers. Generally, markets for such machines fall into two categories, these being domestic or consumer, and corporate. A general requirement for a computing platform for domestic or consumer use is a relatively high processing power, Internet access features, and multi-media features for handling computer games. For this type of computing platform, the Microsoft Windows^{™} 95 and 98 operating system products and Intel processors, so-called WinTel platforms, dominate the market.

On the other hand, for business use, there are a plethora of available proprietary computer platform solutions available aimed at organizations ranging from small businesses to multi-national organizations. In many of these applications, a server platform provides centralized data storage, and application functionality for a plurality of client stations. For business use, other key criteria are reliability, remote access, networking features, and security features. For such platforms, the Microsoft Windows NT 4.0™ operating system is common, as well as the UNIX and, more recently, the Linux operating systems.

Windows-type operating systems allow a user to run separate applications in separate windows, and provide a so-called WIMP (windows, icons, menus and pointers) interface, whereby a user typically interacts with applications using a keyboard to enter data and a mouse to select options and control applications via dialog boxes and drop-down (or pull-up) menus.

With the increase in commercial activity transacted over the Internet, known as "e-commerce", there has been much interest in the prior art on enabling data transactions between computing platforms, over the Internet. In particular, it is perceived to be important for users to be able to enter into binding contracts over the Internet, without the need for the current standard hand-signed paper contract. However, because of the potential for fraud and manipulation of electronic data, in such proposals, fully automated transactions with distant unknown parties on a wide-spread scale as required for a fully transparent and efficient market place have so far been held back. The fundamental issue is one of trust between users and their computer platforms, and between interacting computer platforms, for the making of such transactions.

There have been several prior art schemes which are aimed at increasing the security and trustworthiness of computer platforms. Predominantly, these rely upon adding in security features at the application level, that is to say the security features are not inherently embedded in the kernel of operating systems, and are not built in to the fundamental hardware components of the computing platform. Portable computer devices have already appeared on the market which include a smartcard, which contains data specific to a user, which is input into a smartcard reader on the computer. Presently, such smartcards are at the level of being add-on extras to conventional personal computers, and in some cases are integrated into a casing of a known computer. Although these prior art schemes go some way to improving the security of computer platforms, the levels of security and trustworthiness gained by prior art schemes may be considered insufficient to enable widespread application of automated transactions between computer platforms. Before businesses expose significant value transactions to electronic commerce on a widespread scale, they will require greater confidence in the trustworthiness of the underlying technology.

In the applicant's earlier patent applications published as WO 00/48063 and WO 00/54126, there is disclosed a concept of a 'trusted computing platform' comprising a computing platform which has a 'trusted component' in the form of a built-in hardware component. Two computing entities each provisioned with such a trusted component may interact with each other with a high degree of 'trust'. That is to say, where the first and second computing entities interact with each other the security of the interaction is enhanced compared to the case where no trusted component is present, because:
- A user of a computing entity has higher confidence in the integrity and security of his own computer entity and in the integrity and security of the computer entity belonging to the other party;
- Each entity is confident that the other entity is in fact the entity which it purports to be;
- Where one or both of the entities represent a party to a transaction, e.g. a data transfer transaction, because of the in-built trusted component, third party entities interacting with the entity have a high degree of confidence that the entity does in fact represent such a party;
- The trusted component increases the inherent security of the entity itself, through verification and monitoring processes implemented by the trusted component; and
- The computer entity is more likely to behave in the way it is expected to behave.

As has been indicated above, the conventional method of signing a document is to physically write a signature on the medium (usually paper) upon which an image of a document is reproduced. This method has the advantages that it is clear what is being signed, and the signed image is proof of what was signed. However, it does not meet the needs of e-commerce.

Nowadays it is also possible to digitally sign a document, using a conventional computer platform and standard encryption techniques. In conventional computer platforms, however, the present inventors have appreciated that the electronic rendition of a document which is digitally signed is typically not the same rendition of the document that is visible to the user. It is therefore possible for a user to unintentionally sign data that is different from that which he intended to sign. Conversely, it is also possible for a user to intentionally sign data and later fraudulently claim that the signed data does not correspond to that displayed to him by the computer platform. Such problems would still be the present, even if a trusted platform, as described above, were used.

Conventional electronic methods of signing are well known to those skilled in the art. Essentially, digital data is compressed into a digest, for example by the use of a hash function. Then that digest is encrypted by the use of some encryption method that has been initialised by a secret key (or simply a 'secret'). This is normally done on a computer platform, such as a PC. One implementation is to sign data using a private encryption key held secret on a user's smartcard, which is plugged into a smartcard reader attached to the computer platform. In the specific case of a textual document, the digital data may be the file produced by a word processor application, such as Microsoft's Notepad, Wordpad, or Word. As usual, the act of signing implies that the signer accepts some legal responsibility for the meaning of the data that was signed.

Hash functions are well-known in the prior art and comprise one way functions which are capable of generating a relatively small output data from a relatively large quantity of input data, where a small change in the input data results in a significant change in the output data. Thus, a data file to which is applied a hash function results in a first digest data (the output of the hash function). A small change e.g. a single bit of data in the original data file will result in a significantly different output when the hash function is reapplied to the modified data file. Thus, a data file comprising megabytes of data may be input into the hash function and result in a digital output of the order of 128 to 160 bits length, as the resultant digest data. Having a relatively small amount of digest data generated from a data file stored in the reserved directory is an advantage, since it takes up less memory space and less processing power in the trusted component.

During known signing processes, a user will typically interpret a document as it has been rendered on the computer's monitor at normal magnification and resolution. In existing applications, the user's smartcard signs data in a format that is the representation of the document by the application used to create and/or manipulate the document. The present inventors believe, however, that there is potential for software to send data to the smartcard that has a different meaning from that understood by the user when viewing the screen. This possibility may be sufficient reason to introduce doubt into the validity of conventional methods of digitally signing electronic representations of documents that are to be interpreted by people.

EP 0717337 discloses a system for detecting authorised programs. A cryptographic hash value is calculated on a document and then compared for equality with a corresponding has-value-of reference.

US 5907619 discloses a system for digitally signing compressed video data.

### Disclosure of the Invention

The invention consists of systems and methods to improve confidence in digitally signed documents that are to be interpreted by people. They necessarily involve the reliable display of data, which can be used for other purposes.

In accordance with a first aspect, the present invention provides a system for digitally signing a document comprising: frame buffer memory; means for generating image data representative of a document and storing the image data in the frame buffer memory; means for reading the image data from the frame buffer memory and for generating displayable image data for forwarding to a display means; and means for reading the image data from the frame buffer memory and for generating a digital signature for association with the document of which the image data is representative.

As such, the digital signature is generated on the basis of the data used to display the document to a user.

In preferred embodiments, the trusted component comprises means for denying to any unauthorised application or process write access to at least the portion of the frame buffer memory containing the digital image data of the document, and means for generating a digital signature representative of the digital image data while the respective portion of the frame buffer memory is not accessible for writing data to.

In preferred embodiments the data processing system further comprises a removable token comprising processing means for receiving the digital image data, or a representation thereof, from the frame buffer memory and generating a respective digital signature. Conveniently, the removable token is an appropriately programmed smartcard.

In preferred embodiments the trusted component comprises means for acquiring and/or generating trusted image data and means for controlling the display system to highlight the displayed document image using the trusted image data. This provides visual feedback to a user that the trusted component is in control of the operation.

The trusted image data may comprise pixmap data representative of the trusted image or instructions for forming the trusted image.

Preferably, the trusted component comprises means for acquiring and/or generating trusted image data from a removable token.

The trusted component preferably further comprises means for controlling the display system to display messages to a user.

In preferred embodiments, the data processing system further comprises trusted input means by which a user can respond to messages in a secure fashion. The trusted input means may comprise a switch connected to the trusted component via a secure communications channel.

In preferred embodiments, the trusted component and the secure token enact a mutual authentication process in advance of further interactions.

In preferred embodiments, the trusted component forms an integral part of the display system. For example, the display system may be arranged such that the trusted component is physically and functionally positioned between the main processing means and the frame buffer memory, such that the main processing means can only access the frame buffer memory indirectly through functions of the trusted component.

Preferably, the trusted component further comprises means for generating data summarising a digital signature operation.

In a second aspect, the invention provides a method for digitally signing a document, comprising the steps: generating digital image data of the document and updating the digital image data in a frame buffer memory; reading the digital image data from the frame buffer memory, converting the digital image data into signals suitable for driving a visual display means and transmitting the signals to a visual display means for displaying an image of the document; and on demand, reading the digital image data from the frame buffer memory and generating a digital signature for association with the document as displayed.

Other embodiments of the invention will become apparent from the following description, claims and drawings.

### Brief Description of the Drawings

Embodiments of the present invention will now be described in detail with reference to the accompanying drawings, of which:
Figure 1 is a diagram which illustrates a computer system suitable for operating in accordance with the preferred embodiment of the present invention;
Figure 2 is a diagram which illustrates a hardware architecture of a host computer suitable for operating in accordance with the preferred embodiment of the present invention;
Figure 3 is a diagram which illustrates a hardware architecture of a trusted display processor suitable for operating in accordance with the preferred embodiment of the present invention;
Figure 4 is a diagram which illustrates a hardware architecture of a smart card processing engine suitable for operating in accordance with the preferred embodiment of the present invention;
Figure 5 is a diagram which illustrates a functional architecture of a host computer including a trusted display processor and a smart card suitable for operating in accordance with the preferred embodiment of the present invention;
Figure 6 is a flow diagram which illustrates the steps involved in generating an individual signature of a document;
Figure 7 is diagram which illustrates the sequence of messages between the trusted display processor and the smart card in order to recover seal image data from the smart card;
Figure 8 is diagram which illustrates the sequence of messages between the trusted display processor and the smart card in order to generate a signature of a document image;
Figure 9 is diagram which illustrates the sequence of messages between the trusted display processor and the smart card in order to generate a signature of a summary of the document image signing process;
Figure 10a is a diagram which illustrates an exemplary trusted image;
Figures 10b to 10d are diagrams which illustrate the visual steps in signing a document image; and
Figures 10e to 10g are diagrams which illustrate alternative ways of highlighting the image of a document to be signed.

### Best Mode For Carrying Out the Invention, & Industrial Applicability

The preferred embodiment utilises a trusted component that most conveniently uses some of the characteristics of the 'trusted component' described in the applicant's earlier patent application published as WO 00/48063. In that application, the trusted component is a hardware device, comprising a processor programmed to measure an integrity metric of its host computer, compare it with a true value of the integrity metric and communicate the integrity (or otherwise) of the host computer to users or other host computers. The significant similarities between that trusted component and the trusted component in the preferred embodiment herein are:
that they both use cryptographic processes but preferably do not provide an external interface to those cryptographic processes;
that they are both tamper-resistant or tamper-detecting, so that their operation cannot be subverted, at least without the knowledge of the legitimate user; and
that they both preferably consist of one physical hardware component that is both physically and functionally independent of the host computer on which it resides.

Such independence is achieved by the trusted component having its own processing capability and memory.

Techniques relevant to tamper-resistance are well known to those skilled in the art of security. These techniques include methods for resisting tampering (such as appropriate encapsulation of the trusted device), methods for detecting tampering (such as detection of out of specification voltages, X-rays, or loss of physical integrity in the trusted device casing), and methods for eliminating data when tampering is detected. Further discussion of appropriate techniques can be found at http://www.cl.cam.ac.ukl~mgk25/tamper.html. It will be appreciated that, although tamper-proofing is a most desirable feature of the present invention, it does not enter into the normal operation of the invention and, as such, is beyond the scope of the present description.

In this description, the term 'trusted', when used in relation to a physical or logical component or an operation or process, implies that the behaviour thereof is predictable under substantially any operating condition and highly resistant to interference or subversion by external agents, such as subversive application software, viruses or physical interference.

The term 'host computer' as used herein refers to a data processing apparatus having at least one data processor, at least one form of data storage and some form of communications capability for interacting with external entities, such as peripheral devices, users and/or other computers locally or via the Internet. The term 'host computer system' in addition to the host computer itself includes standard external devices, such as a keyboard, mouse and VDU, that attach to the host computer.

The term 'document', as used herein, includes any set of data that can be visualised using a host computer system. Commonly a document will be a textual document, such as a contract. However, a document may comprise graphics, or pictures, instead of, or as well as, text. In general, a document may comprise a single page or multiple pages.

The term 'pixmap', as used herein, is used broadly to encompass data defining either monochrome or colour (or greyscale) images. Whereas the term 'bitmap' may be associated with a monochrome image only, for example where a single bit is set to one or zero depending on whether a pixel is 'on' or 'off', 'pixmap' is a more general term, which encompasses both monochrome and colour images, where colour images may require up to 24 bits or more to define the hue, saturation and intensity of a single pixel.

As will become apparent, the trusted component according to the preferred embodiment herein provides a secure user interface and, in particular, controls at least some of the display functionality of its host computer. The trusted component herein may or may not also acquire integrity metrics according to the trusted component in applicant's copending patent application, although such acquisition of integrity metrics will not be considered herein.

In essence, the preferred embodiment enables a user to digitally sign a document stored on a host computer using the private key of the user's smartcard, or other form of secure token such as a cryptographic co-processor. The signing is enacted by a trusted display processor (i.e. the trusted component) of the host computer under conditions that provide the user with a high level of confidence that the document being viewed on screen is in fact the document the smartcard is signing. In particular, the smartcard carries trusted image data, or a 'seal', which is passed to the host computer over a secure channel and displayed by the trusted component during the signing procedure. It is in part the display of the trusted image, which is typically unique to the user, which provides the user with the confidence that the trusted component is in control of the signing operation. In addition, in the preferred embodiment, the host computer provides a trusted input device, connected directly to the trusted display processor, by which the user can interact with the host computer in a manner which cannot be subverted by other functions of the host computer.

More particularly, the trusted display processor or a device with similar properties is associated with video data at a stage in the video processing beyond the point where data can be manipulated by standard host computer software. This allows the trusted display processor to display data on a display surface without interference or subversion by the host computer software. Thus, the trusted display processor can be certain what image is currently being displayed to the user. This is used to unambiguously identify the image (pixmap) that a user is signing. A side-effect of this is that the trusted display processor may reliably display any of its data on the display surface, including, for example, the integrity metrics of the prior patent application, or user status messages or prompts.

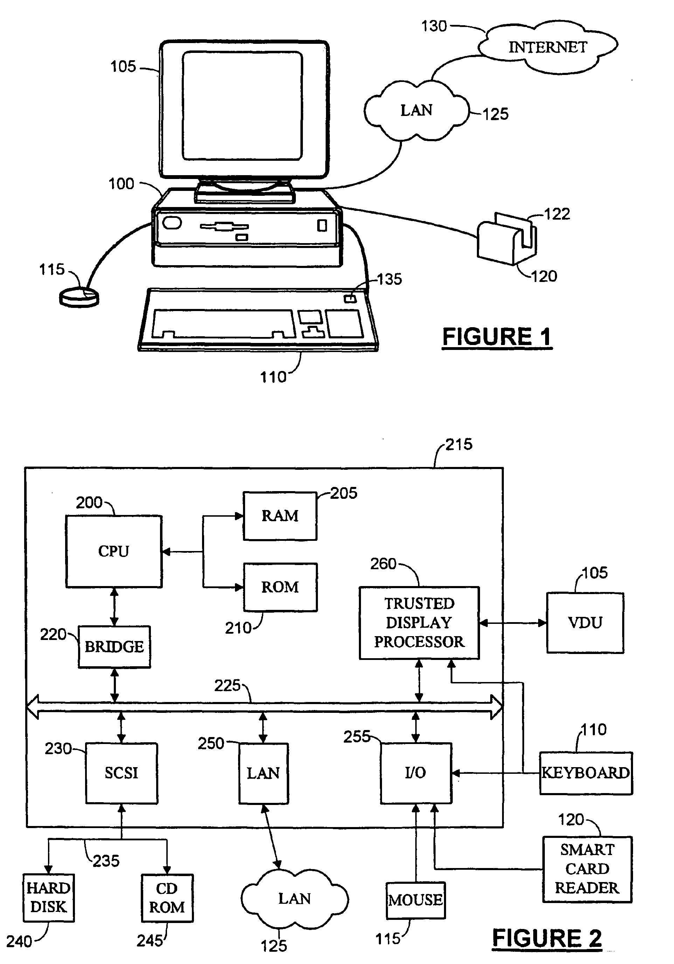

Figure 1 illustrates a host computer system according to the preferred embodiment, in which the host computer is a Personal Computer, or PC, which operates under the Windows NT™ operating system. According to Figure 1, the host computer 100 is connected to a visual display unit (VDU) 105, a keyboard 110, a mouse 115 and a smartcard reader 120, and a local area network (LAN) 125, which in turn is connected to the Internet 130. Herein, the smartcard reader 120 is an independent unit, although it may be an integral part of the keyboard 110. In addition, the host computer 100 has a trusted input device, in this case a trusted switch 135, which is integrated into the keyboard 110. The VDU 105, keyboard 110, mouse 115, and trusted switch 135 can be thought of as the human/computer interface (HCl) of the host computer 100. More specifically, the trusted switch 135 and the display 105, when operating under trusted control, as will be described, can be thought of as a 'trusted user interface'. Figure 1 also illustrates a smartcard 122 for use in the present embodiment as will be described.

Figure 2 shows a hardware architecture of the host computer of Figure 1.

According to Figure 2, the host computer 100 comprises a central processing unit (CPU) 200, or main processor, connected to main memory, which comprises RAM 205 and ROM 210, all of which are mounted on a motherboard 215 of the host computer 100. The CPU in this case is a Pentium^{™} processor. The CPU is connected via a PCI (Peripheral Component Interconnect) bridge 220 to a PCI bus 225, to which are attached the other main components of the host computer 100. The bus 225 comprises appropriate control, address and data portions, which will not be described in detail herein. For a detailed description of Pentium processors and PCI architectures, which is beyond the scope of the present description, the reader is referred to the book, "The Indispensable PC Hardware Handbook", 3rd Edition, by Hans-Peter Messmer, published by Addison-Wesley, ISBN 0-201-40399-4. Of course, the present embodiment is in no way limited to implementation using Pentium processors, Windows^{™} operating systems or PCl buses.

The other main components of the host computer 100 attached to the PCl bus 225 include: a SCSI (small computer system interface) adaptor connected via a SCSI bus 235 to a hard disk drive 240 and a CD-ROM drive 245; a LAN (local area network) adaptor 250 for connecting the host computer 100 to a LAN 125, via which the host computer 100 can communicate with other host computers (not shown), such as file servers, print servers or email servers, and the Internet 130; an IO (input/output) device 255, for attaching the keyboard 110, mouse 115 and smartcard reader 120; and a trusted display processor 260. The trusted display processor handles all standard display functions plus a number of further tasks, which will be described in detail below. 'Standard display functions' are those functions that one would normally expect to find in any standard host computer 100, for example a PC operating under the Windows NT™ operating system, for displaying an image associated with the operating system or application software. It should be noted that the keyboard 110 has a connection to the IO device 255, as well as a direct connection to the trusted display processor 260.

All the main components, in particular the trusted display processor 260, are preferably also integrated onto the motherboard 215 of the host computer 100, although, sometimes, LAN adapters 250 and SCSI adapters 230 can be of the plugin type.

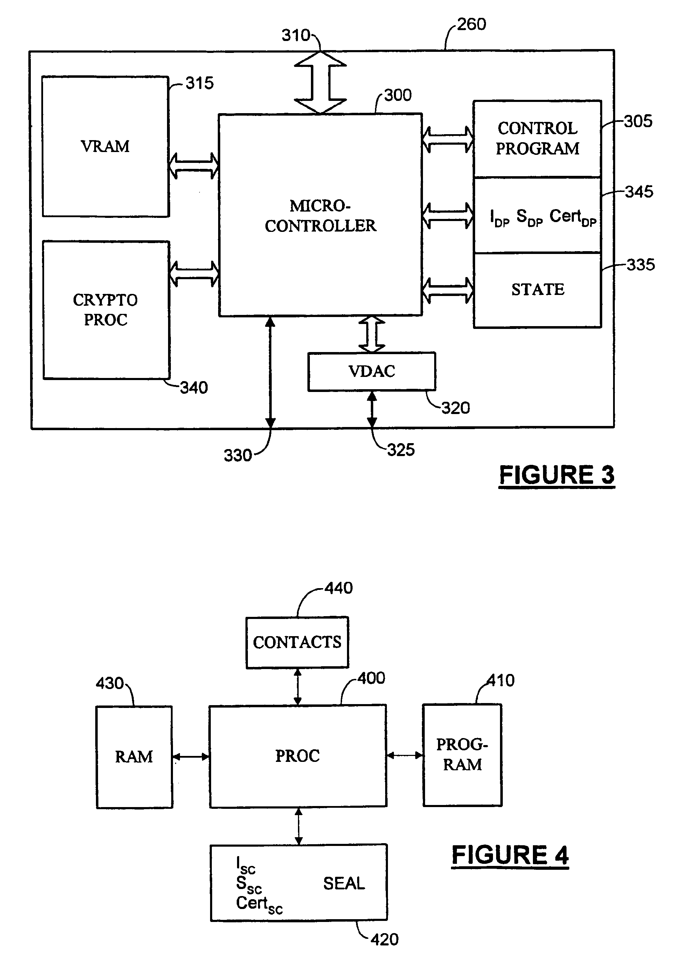

Figure 3 shows a preferred physical architecture for the trusted display processor 260. In accordance with the preferred embodiment, the trusted display processor 260 is a single hardware component having the characteristics of a trusted component, providing the standard display functions of a display processor and the extra, non-standard functions for generating digital signatures and providing a trusted user interface. The skilled person will appreciate that the functions could alternatively be physically split into two or more separate physical components. However, it will be appreciated on reading the following description that integration of all functions into a single trusted component provides a most elegant and convenient solution.

According to Figure 3, the trusted display processor 260 comprises:
a microcontroller 300;
non-volatile memory 305, for example flash memory, containing respective control program instructions (i.e. firmware) for controlling the operation of the microcontroller 300 (alternatively, the trusted display processor 260 could be embodied in an ASIC, which would typically provide greater performance and cost efficiency in mass production, but would generally be more expensive to develop and less flexible);
an interface 310 for connecting the trusted display processor 260 to the PCI bus 225 for receiving image data (i.e. graphics primitives) from the CPU 200 and also trusted image data from the smartcard 122, as will be described;
frame buffer memory 315, which comprises sufficient VRAM (video RAM) in which to store at least one full image frame (a typical frame buffer memory 315 is 1-2 Mbytes in size, for screen resolutions of 1280x768 supporting up to 16.7 million colours);
a video DAC (digital to analogue converter) 320 for converting pixmap data into analogue signals for driving the (analogue) VDU 105, which connects to the video DAC 320 via a video interface 325;
an interface 330 for receiving signals directly from the trusted switch 135;
volatile memory 335, for example DRAM (dynamic RAM) or more expensive SRAM (static RAM), for storing state information, particularly received cryptographic keys, and for providing a work area for the microcontroller 300;
a cryptographic processor 340, comprising hardware cryptographic accelerators and/or software, arranged to provide the trusted display processor 260 with a cryptographic identity and to provide authenticity, integrity and confidentiality, guard against replay attacks, make digital signatures, and use digital certificates, as will be described in more detail below; and
non-volatile memory 345, for example flash memory, for storing an identifier I_{DP} of the trusted display processor 260 (for example a simple text string name), a private key S_{DP} of the trusted display processor 260, a certificate Cert_{DP} signed and provided by a trusted third party certification agency, such as VeriSign Inc., which binds the trusted display processor 260 with a signature public-private key pair and a confidentiality public-private key pair and includes the corresponding public keys of the trusted display processor 260.

A certificate typically contains such information, but not the public key of the CA. That public key is typically made available using a 'Public Key Infrastructure' (PKI). Operation of a PKI is well known to those skilled in the art of security.

The certificate Cert_{DP} is used to supply the public key of the trusted display processor 260 to third parties in such a way that third parties are confident of the source of the public key and that the public key is a part of a valid public-private key pair. As such, it is unnecessary for a third party to have prior knowledge of, or to need to acquire, the public key of the trusted display processor 260.

The trusted display processor 260 lends its identity and trusted processes to the host computer and the trusted display processor has those properties by virtue of its tamper-resistance, resistance to forgery, and resistance to counterfeiting. Only selected entities with appropriate authentication mechanisms are able to influence the processes running inside the trusted display processor 260. Neither an ordinary user of the host computer 100, nor any ordinary user or any ordinary entity connected via a network to the host computer 100 may access or interfere with the processes running inside the trusted display processor 260. The trusted display processor 260 has the property of being "inviolate".

Originally, the trusted display processor 260 is initialised with its identity, private key and certificate by secure communication with the trusted display processor 260 after it is installed onto the motherboard 215 of the host computer 100. The method of writing the certificate to the trusted display processor 260 is analogous to the method used to initialise smartcards by writing private keys thereto. The secure communications is supported by a 'master key', known only to the trusted third party (and to the manufacturer of the host computer 100), that is written to the trusted display processor 260 during manufacture, and used to enable the writing of data to the trusted display processor 260. Thus, writing of data to the trusted display processor 260 without knowledge of the master key is not possible.

It will be apparent from Figure 3 that the frame buffer memory 315 is only accessible by the trusted display processor 260 itself, and not by the CPU 200. This is an important feature of the preferred embodiment, since it is imperative that the CPU 200, or, more importantly, subversive application programs or viruses, cannot modify the pixmap during a trusted operation. Of course, it would be feasible to provide the same level of security even if the CPU 200 could directly access the frame buffer memory 315, as long as the trusted display processor 260 were arranged to have ultimate control over when the CPU 200 could access the frame buffer memory 315. Obviously, this latter scheme would be more difficult to implement.

A typical process by which graphics primitives are generated by a host computer 100 will now be described by way of background. Initially, an application program, which wishes to display a particular image, makes an appropriate call, via a graphical API (application programming interface), to the operating system. An API typically provides a standard interface for an application program to access specific underlying display functions, such as provided by Windows NT™, for the purposes of displaying an image. The API call causes the operating system to make respective graphics driver library routine calls, which result in the generation of graphics primitives specific to a display processor, which in this case is the trusted display processor 260. These graphics primitives are finally passed by the CPU 200 to the trusted display processor 260. Example graphics primitives might be 'draw a line from point x to point y with thickness z' or 'fill an area bounded by points w, x, y and z with a colour a'.

The control program of the microcontroller 300 controls the microcontroller to provide the standard display functions to process the received graphics primitives, specifically:
receiving from the CPU 200 and processing graphics primitives to form pixmap data which is directly representative of an image to be displayed on the VDU 105 screen, where the pixmap data generally includes intensity values for each of the red, green and blue dots of each addressable pixel on the VDU 105 screen;
storing the pixmap data into the frame buffer memory 315; and
periodically, for example sixty times a second, reading the pixmap data from the frame buffer memory 315, converting the data into analogue signals using the video DAC 320 and transmitting the analogue signals to the VDU 105 to display the required image on the screen.

Apart from the standard display functions, the control program includes a function to mix display image data deceived from the CPU 200 with trusted image data to form a single pixmap. The control program also manages interaction with the cryptographic processor and the trusted switch 135.

The trusted display processor 260 forms a part of the overall 'display system' of the host computer 100; the other parts typically being display functions of the operating system, which can be 'called' by application programs and which access the standard display functions of the graphics processor, and the VDU 105. In other words, the 'display system' of a host computer 100 comprises every piece of hardware or functionality which is concerned with displaying an image.

As already mentioned, the present embodiment relies on interaction between the trusted display processor 260 and the user's smartcard 122. The processing engine of a smartcard suitable for use in accordance with the preferred embodiment is illustrated in Figure 4. The processing engine comprises a processor 400 for enacting standard encryption and decryption functions, to support digital signing of data and verification of signatures received from elsewhere. In the present embodiment, the processor 400 is an 8-bit microcontroller, which has a built-in operating system and is arranged to communicate with the outside world via asynchronous protocols specified through ISO 7816-3, 4, T=0, T=1 and T=14 standards. The smartcard also comprises non-volatile memory 420, for example flash memory, containing an identifier I_{SC} of the smartcard 122, a private key S_{SC}, used for digitally signing data, and a certificate Cert_{SC}, provided by a trusted third party certification agency, which binds the smartcard with public-private key pairs and includes the corresponding public keys of the smartcard 122 (the same in nature to the certificate Cert_{DP} of the trusted display processor 260). Further, the smartcard contains 'seal' data SEAL in the non-volatile memory 420, which can be represented graphically by the trusted display processor 260 to indicate to the user that a process is operating securely with the user's smartcard, as will be described in detail below. In the present embodiment, the seal data SEAL is in the form of an image pixmap, which was originally selected by the user as a unique identifier, for example an image of the user himself, and loaded into the smartcard 122 using well-known techniques. The processor 400 also has access to volatile memory 430, for example RAM, for storing state information (such as received keys) and providing a working area for the processor 400, and an interface 440, for example electrical contacts, for communicating with a smart card reader.

Seal images can consume relatively large amounts of memory if stored as pixmaps. This may be a distinct disadvantage in circumstances where the image needs to be stored on a smartcard 122, where memory capacity is relatively limited. The memory requirement may be reduced by a number of different techniques. For example, the seal image could comprise: a compressed image, which can be decompressed by the trusted display processor 260; a thumb-nail image that forms the primitive element of a repeating mosaic generated by the trusted display processor 260; a naturally compressed image, such as a set of alphanumeric characters, which can be displayed by the trusted display processor 260 as a single large image, or used as a thumb-nail image as above. In any of these alternatives, the seal data itself may be in encrypted form and require the trusted display processor 260 to decrypt the data before it can be displayed. Alternatively, the seal data may be an encrypted index, which identifies one of a number of possible images stored by the host computer 100 or a network server. In this case, the index would be fetched by the trusted display processor 260 across a secure channel and decrypted in order to retrieve and display the correct image. Further, the seal data could comprise instructions (for example PostScript™ instructions) that could be interpreted by an appropriately programmed trusted display processor 260 to generate an image.

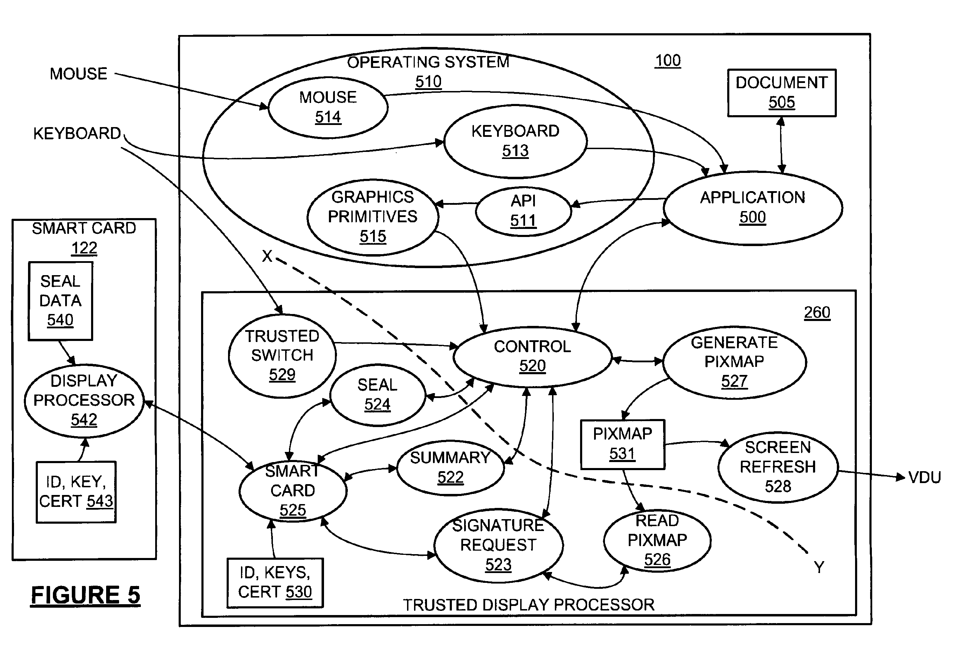

Figure 5 shows the logical relationship between the functions of the host computer 100, the trusted display processor 260 and the smartcard 122, in the context of enacting a trusted signing operation. Apart from logical separation into host computer 100, trusted display processor 260 or smartcard 122 functions, the functions are represented independently of the physical architecture, in order to provide a clear representation of the processes which take part in a trusted signing operation. In addition, the 'standard display functions' are partitioned from the trusted functions by a line x-y, where functions to the left of the line are specifically trusted functions. In the diagram, functions are represented in ovals, and the 'permanent' data (including the document image for the duration of the signing process), on which the functions act, are shown in boxes. Dynamic data, such as state data or received cryptographic keys are not illustrated, purely for reasons of clarity. Arrows between ovals and between ovals and boxes represent respective logical communications paths.

In accordance with Figure 5, the host computer 100 includes: an application process 500, for example a wordprocessor process, which requests the signing of a document; document data 505; an operating system process 510; an API 511 process for receiving display calls from the application process 500; a keyboard process 513 for providing input from the keyboard 110 to the application process 500; a mouse process 514 for providing input from the mouse 115 to the application process 500; and a graphics primitives process 515 for generating graphics primitives on the basis of calls received from the application process via the API 511 process. The API process 511, the keyboard process 513, the mouse process 514 and the graphics primitives process 515 are build on top of the operating system process 510 and communicate with the application process via the operating system process 510.

The remaining functions of the host computer 100 are those provided by the trusted display processor 260. These functions are: a control process 520 for co-ordinating all the operations of the trusted display processor 260, and for receiving graphics primitives from the graphics primitives process 515 and signature requests from the application process 500; a summary process 522 for generating a signed summary representative of a document signing procedure in response to a request from the control process 520; a signature request process 523 for acquiring a digital signature of the pixmap from the smartcard 122; a seal process 524 for retrieving seal data 540 from the smartcard 122; a smartcard process 525 for interacting with the smartcard 122 in order to enact challenge/response and data signing tasks required by the summary process 522, the signature request process 523 and the seal process 524; a read pixmap process 526 for reading stored pixmap data 531 and passing it to the signature request process 523 when requested to do so by the signature request process 523; a generate pixmap process 527 for generating the pixmap data 531 on the basis of graphics primitives and seal image data received from the control process 520; a screen refresh process 528 for reading the pixmap data, converting it into analogue signals and transmitting the signals to the VDU 105; and a trusted switch process 529 for monitoring whether the trusted switch 135 has been activated by the user. The smartcard process 525 has access to the trusted display processor's identity data I_{DP}, private key S_{DP} data and certificate Cert_{DP} data 530. In practice, the smart card and the trusted display processor interact with one another via standard operating system calls.

The smartcard 122 has: seal data 540; a display processor process 542 for interacting with the trusted display processor 260 to enact challenge/response and data signing tasks; smartcard identity data I_{SC}, smartcard private key data S_{SC} and smartcard certificate data Cert_{SC} 543.

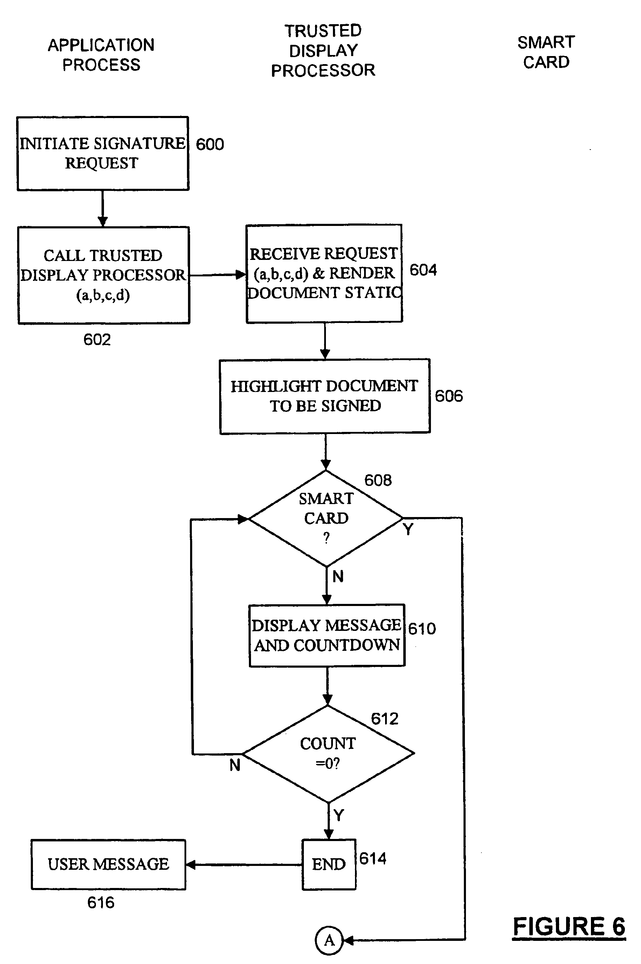

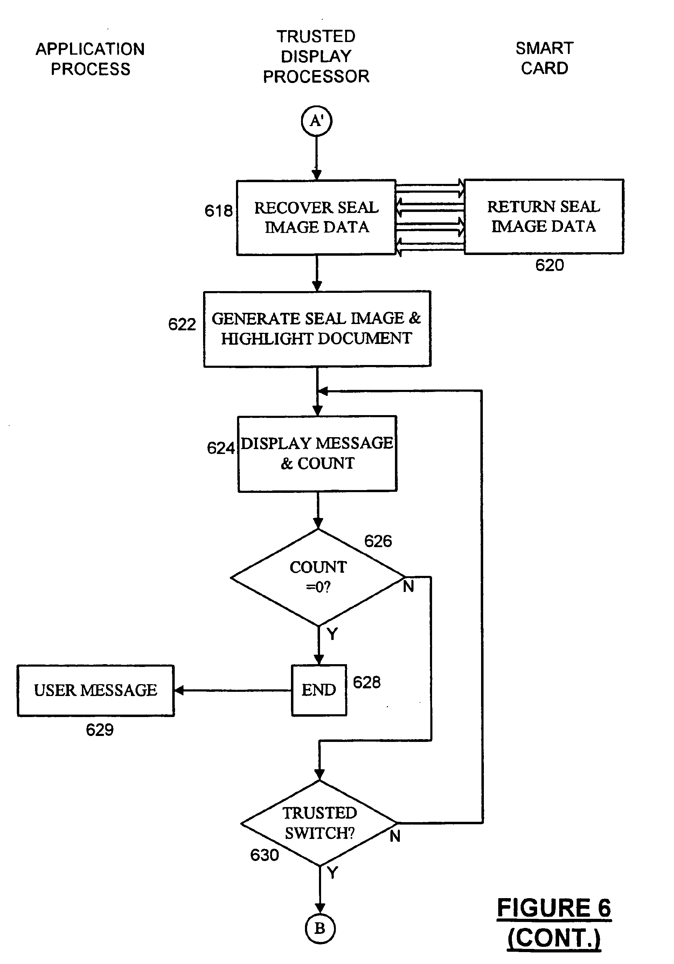

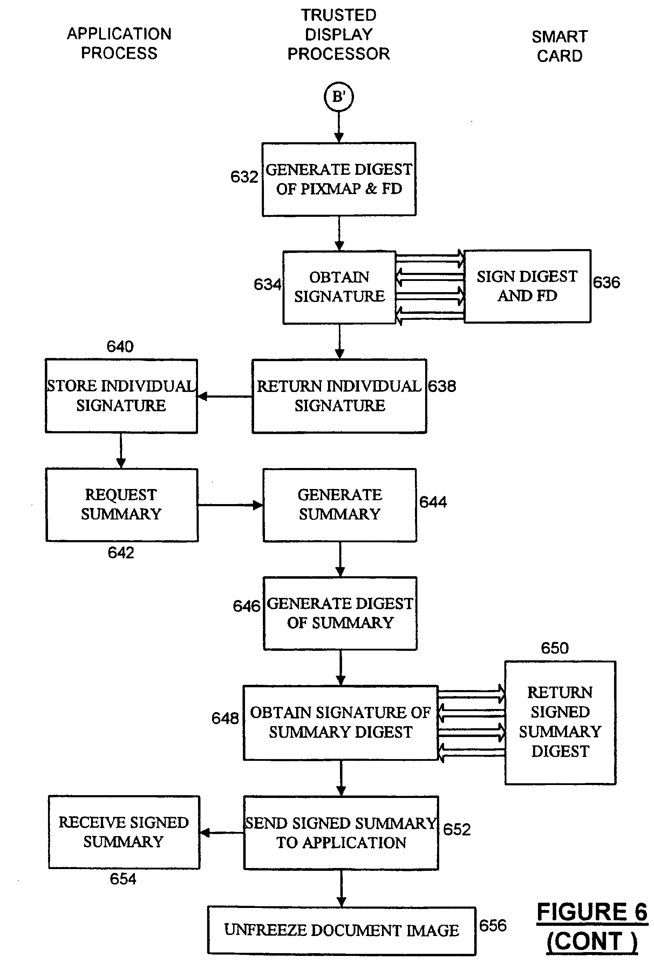

A preferred process for signing a document using the arrangement shown in Figures 1 to 5 will now be described with reference to the flow diagram in Figure 6.

Initially, in step 600, the user controls the application process 500 to initiate a 'signature request' for digitally signing a document. The application process 500 may be realised as a dedicated software program or may be an addition, for example a macro, to a standard word processing package such as Microsoft's Word. In either case, neither the signature request nor the application process 500 need to be secure. When the user initiates the signature request, he also specifies the document to be signed, if it is not one which is already filling the whole screen. For example, the document may be displayed across a part of the full screen area or in a particular window. Selection of a particular area on screen is a simple task, which may be achieved in several ways (using a WIMP environment), for example by drawing a user-defined box bounding the area or by simply specifying co-ordinates.

Next, in step 602, the application process 500 calls the control process 520 to sign the image that is being displayed (within a defined area or window) on the screen; the control process 520 receives the call. In parallel, although it is not shown, the control process 520 receives any graphics primitives from the graphics primitives process and forwards them onto the generate pixmap process 527. The call from the application process 500 to sign a document includes the co-ordinates (a,b,c,d) of the edges of the document. Note that this sending of co-ordinates generally enables the signing of the entire surface of the screen, a complete window, or of an arbitrary part of the screen. The application process 500 then waits for the control process 520 to return the signature of the image.

In response to the signature request, in step 604, the control process 520 forces the image that is to be signed to be 'static' from the time of the request until the process has been completed. Herein, 'static' means that the document image cannot be modified other than by the trusted display processor 260. This is so that the user can be certain that what he sees is what he is signing at all times during the process. In the present embodiment, the control process 520 achieves a 'static' display by 'holding-off', or not processing, any further graphics primitives. In some situations, the graphics primitives process (or equivalent) may 'buffer' graphics primitives until the control process 520 is ready to receive further graphics primitives. In other situations, graphics primitives for the image to be signed may simply be lost. Where the document image fills the whole screen, making the image static is simply a case not processing any graphics primitives. However, where the image to be signed forms only a subset, for example a window, of the full screen, the control process 520 needs to determine whether received graphics primitives would affect the 'static' area, and reject ones that would. As such, the pixmap of the static document image in the frame buffer memory 315 remains unchanged by any instructions from the graphics primitives process, or any other process executing on the CPU 200, while the document image is static.

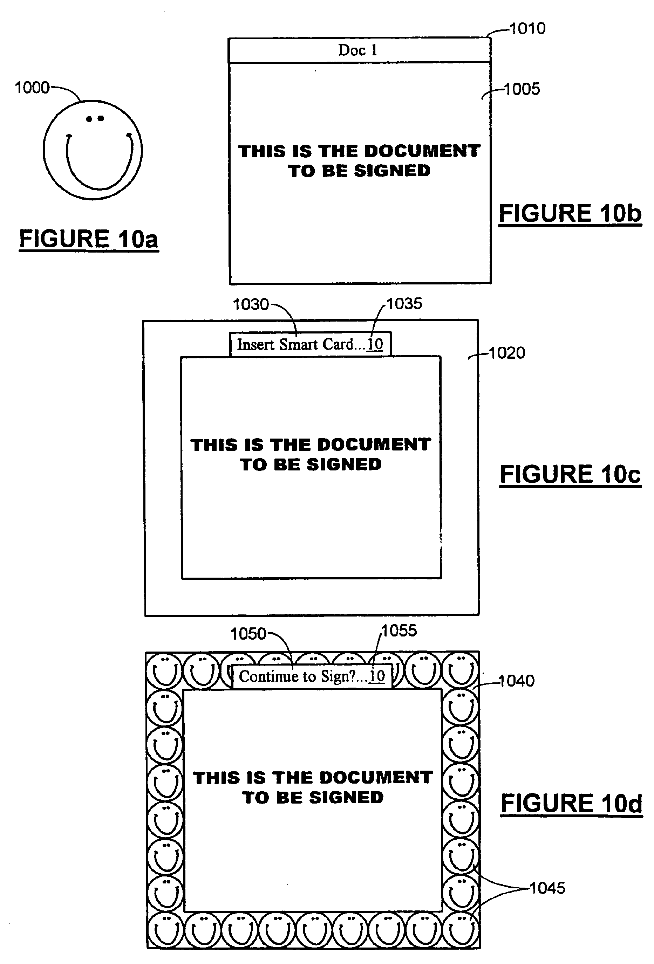

Once the document image has been made static, in step 606, the control process 520 instructs the generate pixmap process 527, including in the call the co-ordinates (a,b,c,d) provided by the application process 500, to modify the pixmap to highlight the document to be signed, as will be described in more detail below with reference to Figure 10c. Then, in step 608, if a smartcard 122 is not already inserted in the smartcard reader 120, as determined by the smart card process 525, the control process 520 instructs the generate pixmap process to display a graphical message asking the user to insert his smartcard 122. This message is accompanied by a ten second countdown timer COUNT. If the countdown timer expires (i.e. reaches zero), as a result of not receiving the smartcard 122, the control process cancels the signing operation in step 614 and returns an exception signal to the application process 500. In response, the application process 500 displays an appropriate user message in step 616. If the smartcard 122 is inserted in time, or is already present, then the process continues.

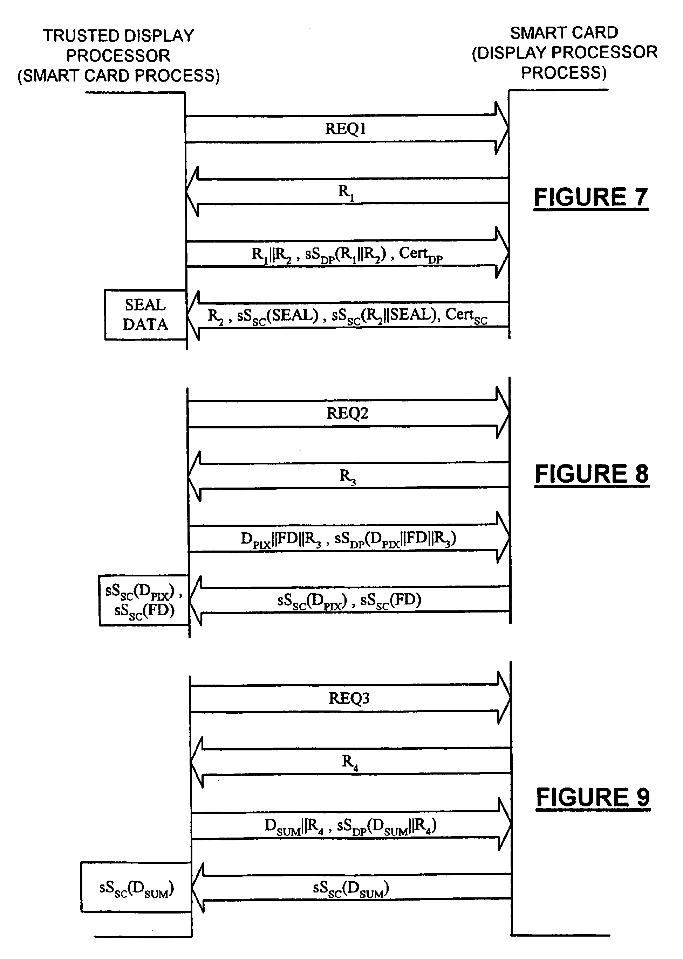

Next, in step 618, the control process 520 calls the seal process 524, and the seal process 524 calls the smartcard process 525, to recover the seal data 540 from the smartcard 122. Optionally, the control process 520 calls the generate pixmap process 527 to display another message indicating to the user that recovery of the seal data 540 is being attempted. In steps 618 and 620, the smartcard process 525 of the trusted display processor 260 and the display processor process 542 of the smartcard 122 interact using well known, 'challenge/response' techniques to enact mutual authentication and pass the seal data 540 from the smartcard and back to the control process 520. The details of the mutual authentication process and passing of the seal data 540 will now be described with reference to Figure 7.

According to Figure 7, the smartcard process 525 sends a request REQ1 to the smartcard 122 to return the seal data SEAL 540. The display processor process 542 generates a nonce R₁ and sends it in a challenge to the smartcard process 525. The smartcard process 525 generates a nonce R₂ and concatenates it with nonce R₁, signs the concatenation R₁∥R₂ with its private key to produce a signature sS_{DP}(R₁∥R₂), and returns the concatenation R₁∥R₂, the signature sS_{DP}(R₁∥R₂) and the certificate Cert_{DP} back to the display processor process 542 of the smartcard 122. The display processor process 542 extracts the public key of the trusted display processor 260 from the certificate Cert_{DP}, and uses this to authenticate the nonce R₁ and the signature sS_{DP}(R₁∥R₂) by comparison with the concatenation R₁∥R₂, to prove that the seal request came from the expected trusted display processor 260 and that the trusted display processor 260 is online.

The nonces are used to protect the user from deception caused by replay of old but genuine signatures (called a 'replay attack') by untrustworthy processes.

The display processor process 542 of the smartcard 122 then concatenates R₂ with its seal data SEAL 540, signs the concatenation R₂∥SEAL using its private key S_{SC} to produce a signature sS_{SC}(R₂∥SEAL), encrypts the seal data SEAL 540 using its private key S_{SC} to produce encrypted seal data 540 sS_{SC}(SEAL), and sends nonce R₂, the encrypted seal data sS_{SC}(SEAL), the signature sS_{SC}(R₂∥SEAL) and the smartcard's certificate Cert_{SC} to the smartcard process 525 of the trusted display processor 260. The smartcard process 525 extracts the smartcard's public key from the certificate Cert_{SC} and uses this to verify nonce R₂ and the signature sS_{SC}(R₂∥SEAL), decrypt the seal data SEAL 540 from the encrypted seal data 540 sS_{SC}(SEAL) and, finally, return the seal data SEAL 540, via the seal process 524, to the control process 520.

Returning to Figure 6, in step 622, when the control process 520 receives the seal data SEAL 540, it forwards the data to the generate pixmap process 527, and instructs the generate pixmap process 527 to generate a seal image and use it to highlight the document to be signed, as will be described below with reference to Figure 10d. Then, in step 624, the control process 520 instructs the generate pixmap process 527 to display a message to the user asking whether they wish to continue with the signing operation. This message is accompanied by a ten second countdown timer COUNT. If the countdown timer expires, in step 626, as a result of not receiving a response from the user, the control process cancels the signing operation, in step 628, and returns an exception signal to the application process 500. In response, the application process 500 displays an appropriate user message in step 629. If, in step 630, the user responds positively by actuating the trusted switch 135 within the ten second time limit, the process continues. The authorisation to continue could alternatively be supplied over an unreliable channel, rather than by using a trusted switch 135, or even using appropriate software routines, providing a reasonable level of authentication is used. Alternatively, it may be decided that the mere presence of an authentic smartcard may be sufficient authorisation for the signing to occur. Such an alternatives are a matter of security policy.

Next, in step 632, the control process 520 instructs the signature request process 523 to request the signing of the document image; the signature request process 523 calls the read pixmap process 526 to request return of a digest of the pixmap data of the document to be signed; and the read pixmap process 526 reads the respective pixmap data, uses a hash algorithm to generate a digest D_{PIX} of the pixmap data and returns the digest to the signature request process 523. Additionally, the read pixmap process 526 generates 'display format data' FD, which includes information necessary to reconstruct the image from the pixmap data into a text-based document at a later time (FD is not essential, since the document text may not need to be reconstructed), and returns this also to the signature request process 523. For example, the display format data FD may include the number of pixels on the screen surface and their distribution, such as '1024 by 768', and the font type and size used for the text (if the document is text-based) in the document (at least some of this information may instead, or in addition, be contained in a document 'summary', as will be described below). In steps 634 and 636, the signature request process 523 interacts with the display processor process 542 of the smartcard 122 using well-known challenge/response processes to generate an individual signature of the document, as will now be described in detail with reference to the flow diagram in Figure 8.

According to Figure 8, the smartcard process 525 generates a request REQ2 for the smartcard 122 to generate a signature of the digest D_{PIX} and display format data FD. The display processor process 542 of the smartcard 122 responds by generating a nonce R₃ and sending it to the smartcard process 525 with a challenge to return the digest D_{PIX} and the display format data FD. The smartcard process 525 concatenates the digest D_{PIX} with the display format data FD and nonce R₃, and signs the concatenation D_{PIX}∥FD∥R₃ to produce a signature sS_{DP}(D_{PIX}∥FD∥R₃). The smartcard process 525 then sends the concatenation D_{PIX}∥FD∥R₃ and its respective signature sS_{DP}(D_{PIX}∥FD∥R₃) to the display processor process 542 of the smartcard 122. The display processor process 542 uses the trusted display processor's public key (which it has already received in the seal data 540 exchange) to verify the trusted display processor's signature sS_{DP}(D_{PIX}∥FD∥R₃) and nonce R₃, to prove that the digest is the current image digest. The display processor process 542 signs the digest of the pixmap D_{PIX} and the display format data FD, using its private key, to produce two signatures sS_{SC}(D_{PIX}) and sS_{SC}(FD) respectively. The display processor process 542 of the smartcard then returns the signed digest sS_{SC}(D_{PIX}) and signed display format data sS_{SC}(FD) to the smartcard process 525 of the trusted display processor 260. The smartcard process 525 next verifies the digest D_{PIX} and display format data FD, using the smartcard's public key (which it already has as a result of the seal data 540 exchange), and verifies the smartcard's signature, to prove that the smartcard is still online.

Returning to Figure 6, in step 638, the smartcard process 525 of the trusted display processor 260 concatenates the pixmap PIX, the smartcard's signed versions of the pixmap digest sS_{SC}(D_{PIX}) and display format data sS_{SC}(FD) to form an individual signature PIX∥sS_{SC}(D_{PIX})∥sS_{SC}(FD) of the image, and returns it, via the signature request process 523, to the control process 520, which returns the individual signature to the application process 500. The application process 500 stores the individual signature, in step 640, and responds with a further call to the control process 520 to 'summarise the signing' operation in step 642. The purpose of a summary is to complete the signature, as will be described with reference to the flow diagram in Figure 9 and also the example summary below:

In step 644, the control process 520 calls the summary process 522 to generate a summary message SUM containing the number of images (two in the example summary above) plus the individual signatures of the images (lines 6 and 10 of the example), a label identifying the trusted display device (line 1 in the example), the current time and date (line 2 in the example) and a signed digest of the summary itself (line 14 in the example). For each image, the summary also includes the size of the image in pixels (e.g. 560x414 for image 1), the offset from the origin of the screen in pixels (e.g. 187,190 for image 1) and the display resolution in pixels (e.g. 1024x768 for image 1).

The summary process 522 then generates a digest of the summary D_{SUM} in step 646 and calls the smartcard process 525 of the trusted display processor 260 to interact with the smartcard 122 using challenge/response processes to generate a signature of the summary digest D_{SUM}, as will now be described with reference to Figure 9.

According to Figure 9, the smartcard process 525 generates a request REQ3 for the smartcard 122 to generate a signature of the digest of the summary D_{SUM}. The display processor process 542 of the smartcard generates a nonce R₄ and sends it in a challenge to return the digest of the summary D_{SUM}. The smartcard process 525 concatenates the digest D_{SUM} with nonce R₄ and signs the concatenation D_{SUM}∥R₄ to produce a signature sS_{DP}(D_{SUM}∥R₄). The smartcard process 525 of the trusted display processor 260 then sends the concatenation D_{SUM}∥R₄ and respective signature sS_{DP}(D_{SUM}∥R₄) to the display processor process 542. The display processor process 542 then verifies the trusted display processor's signature and nonce R₄, using the trusted display processor's public key (which it already has from the seal data 540 exchange), to prove that the summary is the current summary. Next, the display processor process 542 signs the digest of the summary D_{SUM} using its private key and sends the signed digest sS_{SC}(D_{SUM}) to the smartcard process 525. The smartcard process 525 of the trusted display processor 260 verifies the digest and verifies the smartcard's signature, using the smartcard's public key, to prove that the smartcard is still online.

Returning to Figure 6, in step 652, the smartcard process 525 returns the summary SUM concatenated with the signed digest of the summary sS_{SC}(D_{SUM}) (to form concatenation SUM∥sS_{SC}(D_{SUM})), via the summary process 522, to the control process 520, and the control process 520 returns the summary SUM∥sS_{SC}(D_{SUM}) to the application process 500. The application process 500 receives the summary in step 654.

The individual signature and summary may be used by the application process 500, or any other process running on the host computer 100 in various ways outside the scope of this invention, including as proof of contract, for storage or for transmission to other entities.

Finally, in step 656, the control process 520 unfreezes the display, by recommencing receipt and processing of graphic primitives associated with the document image, and thereby in effect returns control of the display back to the application process 500 or other application software. Alternatively, control may not be handed back to the application process 500 until the user actuates the trusted switch 135 again, typically in response to another user message, which, this time, would not have a timeout period. This would give the user more time to review the static document image before returning the host computer to standard, non-trusted operation.

In order to verify a signed document, both the individual signature PIX∥sS_{SC}(D_{PIX})∥sS_{SC}(FD) and the summary SUM∥sS_{SC}(D_{SUM}) must be verified. Such verification methods are well known to those skilled in the art of security. For example, the signature on the digest of the pixmap sS_{SC}(D_{PIX}) is verified using the public key of the user, which is publicly available and preferably contained within a digital certificate Cert_{SC} supplied by a certification authority. The verified digest is then compared with a value obtained by re-computing the digest from the pixmap, where the digest is generated using a standard, well-known and defined hash function. If the match is exact, the signature has been verified. Other signatures, including the summary, are checked in the same way.

A preferred method of enabling a person to verify the wording of the signed document is to translate the pixmap back into an image. This requires an application, or indeed a trusted display processor 260, to load the pixmap data PIX into the frame buffer memory 315 of a respective host computer 100. This allows a person to view the document that the signer has signed.

The stages of highlighting a document to be signed will now be described with reference to Figures 10a to 10d.

In the preferred embodiment, the seal data SEAL comprises a pixmap of a trusted image. For example, as shown in Figure 10a, the pixmap of the seal data 540 defines a 'smiley face' 1000. Figure 10b illustrates an image 1005 of an exemplary document Doc1 to be signed, in a window 1010 of the screen (not shown). As a first highlighting step, after the image has been made static but before the seal data has been received, the trusted display processor 260 highlights the document to be signed by superimposing a frame 1020 around the document image 1005, as illustrated in Figure 10c. Also, where a smartcard 122 is not present, a user message 1030 asking the user to insert his smartcard is displayed accompanied by a ten second countdown timer 1035, as also illustrated in Figure 10c. Next, when the smiley face pixmap image is retrieved from the smartcard 122, the trusted display processor 260 embellishes the frame 1040 with multiple instances 1045, or a mosaic, of the smiley face, as shown in Figure 10d. In addition, as shown in Figure 10d, the trusted display processor 260 generates a further user message 1050, accompanied by a ten second countdown timer 1055, asking the user whether they wish to proceed with the signing process. This embellished frame 1040 both indicates to the user that the correct static image area is being acted on and provides the user with a high level of confidence that the trusted display processor 260 is fully in control of the signing process; the presence of the user's own seal image provides confidence to the user that the message has come from the trusted display processor 260 rather than from some other (possibly subversive) software application or hardware device.

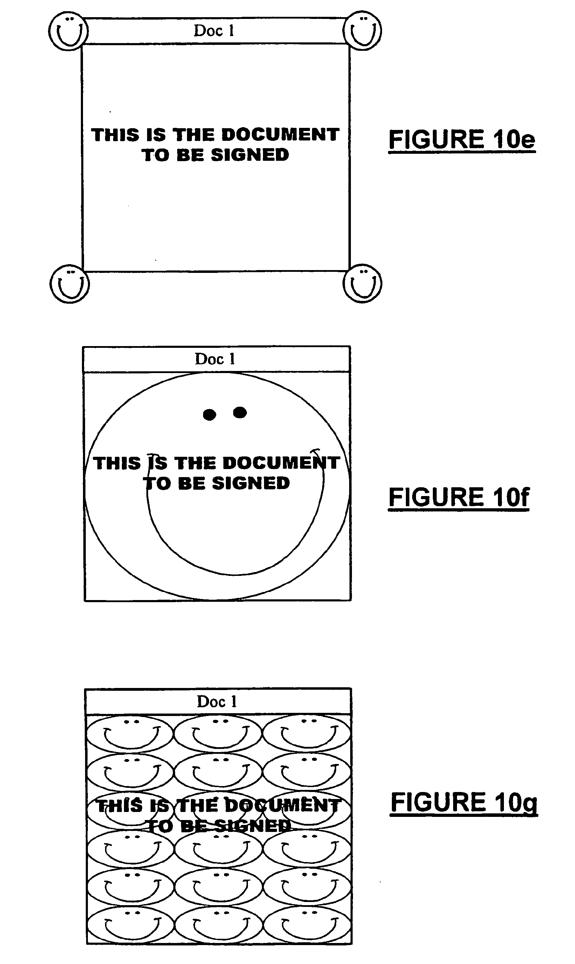

Figures 10e and 10g illustrate alternatives to the 'frame' visual effect illustrated in Figures 10c and 10d. In Figure 10e, four single seal images 1060 are positioned at the corners of the static document image using the co-ordinates provided by the application process 500, to define the static image area. In Figure 10f, the static image is defined by modifying the background thereof to show a single seal image. In Figure 10g, the static image is defined by modifying the background thereof to show a mosaic of seal images. It is expected that the skilled reader will be able to think of other visual effects by which the static image may be highlighted in the light of the present description. In addition, it may be desirable to include further status messages during the signing operation, for example "Retrieving seal data 540 now....", "Generating document signature now....", etc.

It will be appreciated that the trusted display processor 260 needs to be able to display the seal image(s) and the messages in the correct places on screen. Clearly, the seal image and the message images are temporary, to the extent they appear during the signature process and disappear thereafter. There are well-known, standard display techniques for overlaying a first image with a second image, thereby obscuring a part of the first image, then removing the second image and restoring the portion of the first image that had been obscured. Such techniques are used as a matter of course in normal windows environments, for example, where multiple windows may overlap one another. The trusted display processor 260 is arranged to implement one of more of these standard techniques for the purposes of superimposing the seal image(s) and the message images over the standard display.

In some scenarios, it may be that a document is too large to fit all at once onto the VDU 105 screen and still be easily read by a person. Obviously, for the present embodiment to be practical, it is essential that a user can very clearly read the document before signing it. Therefore, the document can be split into multiple screen pages, each of which needs to be signed and cryptographically chained to the signature of the previous page, as will now be described.

First, the application process 500 causes the image of the first page to be displayed and makes a call to the trusted display processor 260 for signing as before. When the trusted display processor 260 returns the individual signature, instead of requesting a summary, the application process 500 instructs the trusted display processor 260 to display the image of the second page and sign the image. Clearly, in this case, the trusted display processor 260 is arranged to support such a request by the application process 500. Only after all images have been signed and returned to the application process 500 does the application process 500 issue a request for a summary. Then, the summary includes the number of images that were signed in this multi-page document, for example as illustrated in the two-page summary above.

The first page in the multi-page document is signed in the same way as a single page, resulting in return of an individual signature. When subsequent images are presented for signing, however, the trusted display processor 260 recognises that they are part of a multi-page document because no summary request was received after the previous signature request. As a result, the trusted display processor 260 displays a different message, which requests permission from the user to sign a continuation page. In response, the user who is signing a multi-page document uses the same reliable permission channel as before (for example, the trusted switch 135) to confirm to the trusted display processor 260 that this page is associated with the previous page, and is also to be signed. When the trusted display processor 260 receives this multi-page confirmation, it concatenates the signature of the previous signed page with the pixmap of the current page, creates a digest of the concatenation, and sends that to the smartcard for signing. This is instead of sending a digest of just the current pixmap. This process cryptographically 'chains' a subsequent page to the previous page, so that pages cannot be rearranged without detection, nor can intermediate pages be inserted or deleted without detection.

The validity of the first page may be checked in exactly the same way as a single page. The validity of subsequent pages is checked using the same method as for a single page, except that the digest of the current pixmap is replaced by the digest of the concatenated previous signature and current pixmap.

It will be appreciated that there are many ways of cryptographically chaining a subsequent page to a previous page. Such ways will be obvious to those skilled in the art of security in the light of the present description.

For added security, the image of each page of a multi-page document may be arranged to include the conventional footer 'Page x of y, where 'x' is the number of the page and 'y' is the total number of pages. This enables ready detection by a person of a truncated document simply by reading the document.

A significant benefit of the present document signing scheme is that a signed document can be re-signed and countersigned. As such, it is preferable for the summary of a document to include an audit trail. There are many variations on re-signing and countersigning, although (obviously) an electronic integrity check should always be done before any further signing. At one extreme, the new signer could view, confirm and re-sign each signed image in turn, effectively replacing the original signature by a new one. This method could be used, for example, by a user signing a document prepared for him by someone else. At the other extreme, the new signer could simply 'rubber stamp' the original signature by signing the original summary, without necessarily viewing the document at all. This could be useful to a manager countersigning the work of a trusted employee.

For a re-signing operation, the application process 500 issues a re-signing request, and transmits an already signed document (plus the individual signature(s) and the summary) to the trusted display processor 260. The trusted display processor 260 verifies the signed document using the public key of the signer, recovers the pixmap of the document (or each page of the document) and displays each verified image in the correct order to the new user, as if they were original images from the signature request application. The user confirms the acceptance of each individual image, for example using a trusted switch 135 as before, and causes the images to be signed as before by a smartcard belonging to the new user. This results in a signed document that is the same as the original document, except that it has been signed by the smartcard belonging to the new user.

Similarly, for a counter-signing operation, the application process 500 issues a counter-signing request and transmits the signed document (plus individual signatures and the summary) to the trusted display processor 260. The trusted display processor 260 verifies the signed document and displays each verified image in the correct order to the new user, as if they were original images from the application process 500. The user confirms acceptance of each individual image and the trusted display processor 260 signs the original summary using the smartcard belonging to the new user. Optionally the new user could provide a certificate of the previous user's public key, signed by the new user, to ease the processing overhead associated with later verification of the signature.

Clearly, there are many possible variations on the theme of re-signing and countersigning, which will be apparent to the skilled person in the light of the present description.

Since a document may have a history of signing, re-signing and/or counter-signing, the present embodiment conveniently provides audit information, which forms part of the document summary. This audit information allows the signature history of the document to be traced. The audit information includes data about the previous state of the document and the actions taken by the new user to create the new state of the document. The audit information is signed by the trusted display processor 260, since the audit information must be independent of the user. The audit information always contains any previous summary information (including the signature on that summary information, by the previous signer). If the signed document has been created from scratch, the identity label I_{DP} of the trusted display processor 260 is inserted as an audit root. The audit information preferably also includes an indication of which individual images were viewed and confirmed by the new user, and whether the document was created from scratch, or was re-signed, or was countersigned by the new user. To create a summary including audit information, the smartcard is sent a digest of the audit information concatenated with the previously described contents of a summary, rather than a digest of just the previously described contents of a summary. The rest of the process is as previously described.

An enhancement to the process for signing a document is that, prior to signing the pixmap data, the trusted display processor 260 compresses the pixmap using a lossless compression algorithm so that the overheads associated with storing and sending the individual signature are reduced.

The pixmap may be compressed by standard compression algorithms, for example a codeword-based algorithm applying LZ-1 or LZ-2 compression. Alternatively, a technique similar to OCR (optical character recognition) may be used to compress the pixmap. In this case, the situation differs from conventional OCR in that the input data has been perfectly 'scanned', albeit at a lower resolution than in conventional OCR. The OCR-compressed version of the pixmap may be generated by 'blob-matching' to create an alphabet for the pixmap, constructing a pixmap of each character in the alphabet, and constructing a message using those characters, such that the message represents the original pixmap. This means that the pixmap can been compressed to a new alphabet and a message written in that alphabet. Since there are, obviously, no errors nor ambiguity in the pixmap data, this is a lossless compression method.

Another way of reducing the size of the image pixmap is by representing the image as a pure black and white image, requiring only a single bit - set to zero or one - to define whether a pixel is black or white. Otherwise, the document image is represented as a full colour image, where each pixel may typically require up to 24-bits. Obviously, this technique may be suitable for simple, black and white text-based documents. However, it would not be appropriate for colour documents or images.

At any time, the document image may be converted back into a text-based document using an OCR-type process to reconstruct a standard digital textual representation of the document. This technique cannot be used in the signature, since the textual mapping may be incorrect, but can be used by the receiver of a signed document to convert it back into a standard digital textual representation (such as ASCII) for subsequent machine manipulation. In preferred embodiments, the trusted display processor 260 is equipped to enact OCR document recovery.

To enact OCR, an OCR alphabet is generated in a standard fashion and is then matched to stored fonts and hence converted to a standard character set. As in conventional OCR, ambiguous matches may be retained as a pixmap and flagged for conversion by the user. (This is unlikely, particularly if font type and size information has been supplied in the display format data FD, because there is no error in the data.) In cases of extreme caution, the entire reconstructed document should be manually checked by a person against the view of the document that the signer intended to sign.

Preferably all document reconstruction processes are done by processes that are trusted.

The preferred embodiment described above relies on the premise that the trusted display processor 260 has direct and exclusive access to video data stored in the frame buffer memory 315, beyond the point where the video data can be manipulated by host computer 100 software, including the operating system. This implies that the video data cannot be modified unless the trusted display processor 260 makes the modification.

It will be appreciated that not all computer architectures are arranged in this way. For example, some computer architectures are arranged such that the frame buffer memory forms a part of the main memory, thus forming a single address space (SAS) display system. One benefit of such a system is that both the CPU and the display processor can access the frame buffer memory and share the graphics operation overhead, thereby improving graphics performance. Clearly, an implementation of the present invention in such a SAS system cannot rely on the premise that the buffer memory is safe during signing, since the CPU can still access the memory. However, there are many ways in which such a SAS system may be modified to support implementations of the present invention. For example, the memory could be provided with a control line from a trusted display processor such that, during a signing operation, the memory is prevented from being updated by data from the CPU. The memory devices themselves are preferably modified so that they include the extra logic to perform this function. Alternatively, access to memory is blocked by other logic circuits inserted into the normal control path of the memory. Such systems, therefore, rely on the modified premise that the video data in the frame buffer memory can only be modified, other than by the trusted display processor, with the permission of the trusted display processor. Clearly, this premise is as valid for secure operation as the first premise, as long as the system is truly secure.

In other architectures, for example in simple graphics environments, the functionality of a display processor may form part of the operating system itself, thereby removing the requirement for separate display processor hardware. Clearly, in this case, the graphics overhead put on the CPU will be higher than in a system with separate display processor hardware, thereby limiting the graphics performance of the platform. Clearly, there is then no place for a 'trusted display processor' as such. However, it will be apparent to the skilled person that the same function as provided by the trusted display processor, that of protecting the frame buffer memory and interacting with a smartcard, can be implemented using an appropriate trusted component, which controls the display system (in whatever form) during signing.

In other embodiments of the invention, the functionality of trusted switch 135 may be replaced by software. When the trusted switch process 529 is activated (as in step 630), instead of waiting for operation of a dedicated switch, the trusted component 260 uses its random number generation capability to generate a nonce in the form of a textual string. This textual string is then displayed on the trusted display in a message of the form "Please enter <textual string> to confirm the action>. To confirm the action, the user must then enter the given textual string, using the keyboard 110. As the textual string will be different every time, and because no other software has access to this textual string (it passes only between the trusted processor 300 and the display), it will not be possible for malicious software to subvert this confirmation process.

In other embodiments of the invention, in addition or alternatively, the trusted display processor (or equivalent) includes an interface for driving a trusted display. The trusted display might be, for example, an LCD panel display. In the same way that the trusted switch provides a trusted means for a user to interact with the trusted display processor, the trusted display can provide a trusted means for feeding back information to the user other than via the standard VDU. For example, the trusted display might be used to provide user status messages, as described above, relating to a signing operation. As such, applications running on the standard host computer should not be able to access the trusted display, because the display is connected either directly to the trusted display processor or via some form of trusted channel. In essence, such a trusted display is an addition to the so-called 'trusted interface' described above. In practice, there is no reason why other forms of trusted feedback device, of which the trusted display is one example, could not be included in addition, or as an alternative. For example, there may be scenarios where some form of trusted sound device would be useful for providing audible feedback.

## Claims

1. A system for digitally signing a document comprising:
frame buffer memory (315);
means (500) for generating image data representative of a document (505) and storing the image data in the frame buffer memory (315);
means (320) for reading the image data from the frame buffer memory (315) and for generating displayable image data for forwarding to a display means; and
means (300, 520) for reading the image data from the frame buffer memory (315) and for generating a digital signature for association with the document (505) of which the image data is representative.

2. A system as claimed in claim 1, further comprising a main processing means (200) for generating graphics signals for displaying the document and a display means (105) for displaying displayable image data, whereby the means (320) for generating image data is adapted to do so on the basis of graphics signals generated by the main processing means (200), and whereby the means (320) for reading the image data from the frame buffer memory is adapted to convert the image data into signals suitable for displaying an actual image thereof on the display means and to forward those signals to the display means (105) as displayable image data.

3. A data processing system according to claim 1 or claim 2, further comprising a removable token (122) comprising processing means (400) for receiving the image data, or a representation thereof, and generating a respective digital signature.

4. A system as claimed in claim 2 or claim 3, further comprising a main memory means (205) for storing a document to be digitally signed, a means (110, 115, 500) for generating a request signal for the document (505) to be digitally signed, and wherein the means (300, 520) for generating a digital signature for association with the document of which the image data is representative is comprised in a trusted component (260) comprising independent processing means (300) which is adapted to generate a digital signature associated with a user on receiving the request signal, and wherein the frame buffer memory (315), the means (320) for reading image data and for generating displayable image data and the display means (105) together comprise a display system.

5. A system according to claim 4, wherein the trusted component (260) comprises means (520) for denying to any unauthorised application or process write access to at least the portion of the frame buffer memory (315) containing the image data of the document, and means (520) for generating a digital signature for association with the image data while the respective portion of the frame buffer memory (315) is not accessible for writing of data.

6. A system according to claim 4, wherein the trusted component (260) further comprises means for acquiring and/or generating trusted image data and means for controlling the display system to highlight the displayed document image using the trusted image data.

7. A system according to claim 6, wherein the trusted image data comprises pixmap data representative of the trusted image or instructions for forming the trusted image.

8. A system according to claim 6 or claim 7, wherein the trusted component (260) controls the display system to highlight the displayed document image by producing one or more of the following visual effects:
a border, or an indicator or indicators defining a border, **characterised by** the trusted image and positioned at least partly around the document image;
a background pattern **characterised by** the trusted image forming at least part of the background of the document image;
an image **characterised by** the trusted image formed within the document image; and/or
a text message **characterised by** the trusted image formed within or near the document image.

9. A system according to any one of claims 6 to 8, wherein the trusted component (260) comprises means for acquiring and/or generating trusted image data from a removable token (122).

10. A system according to claim 4, wherein the trusted component (260) further comprises means for controlling the display system to display messages to a user.

11. A system according to claim 10, further comprising trusted input means by which a user can respond to messages in a secure fashion.

12. A system according to claim 11, wherein the trusted input means comprises a switch (135) connected to the trusted component (260) via a secure communications channel.

13. A system according to claim 3 or claim 9, wherein the trusted component (260) and the secure token (122) enact a mutual authentication process in advance of further interactions.

14. A system according to claim 4, wherein the trusted component (260) forms an integral part of the display system.

15. A system according to claim 14, wherein the display system is arranged such that the trusted component (260) is physically and functionally positioned between the main processing means (200) and the frame buffer memory (315), such that the main processing means (200) can only access the frame buffer memory (315) indirectly through functions of the trusted component.

16. A system according to any one of the preceding claims, further comprising means for generating data summarising a digital signature operation.

17. A method for digitally signing a document, comprising the steps:
generating digital image data of the document (505) and updating the digital image data in a frame buffer memory (315);
reading the digital image data from the frame buffer memory (315), converting the digital image data into signals suitable for driving a visual display means and transmitting the signals to a visual display means (105) for displaying an image of the document; and
on demand, reading the digital image data from the frame buffer memory (315) and generating a digital signature for association with the document as displayed.

18. A method according to claim 17, further comprising the step (604) of temporarily denying write access to the frame buffer memory (315) by unauthorised processes while generating the digital signature.

19. A method according to claim 17 or claim 18, further comprising the step of acquiring and/or generating trusted image data and using the trusted image data to highlight the document image.

20. A method according to claim 19, wherein step of highlighting the document image is achieved by generating any one or more of the following visual effects:
a border, or an indicator or indicators defining a border, **characterised by** the trusted image and positioned at least partly around the document image;
a background pattern **characterised by** the trusted image forming at least part of the background of the document image;
an image **characterised by** the trusted image formed within the document image; and/or
a text message **characterised by** the trusted image formed within or near the document image.

21. A method according to claim 19 or claim 20, wherein the trusted image data is acquired from a removable token (122).

22. A data processing system arranged to digitally sign a document in accordance with the method of any one of claims 17 to 21.

23. A method for digitally signing a document comprising a plurality of individual viewable pages, comprising the steps of:
for each of said individual viewable pages, generating a digital signature for association with the page according to the method of any of claims 17 to 21; and
generating a further digital signature for association with the digital signatures of all the individual viewable pages.

24. A method for a second user to digitally counter-sign a document that has already been signed by a first user, the document being accompanied by a respective first digital signature generated by using a secret of the first user, comprising the steps of:
verifying the integrity of the first digital signature;
and generating a second digital signature for association with the document according to the method of any of claims 17 to 21 using a secret of the second user for generation of the second digital signature.

25. A method for a second user to digitally re-signing a document that has already been signed by a first user, the document being accompanied by a respective first digital signature generated by using a secret of the first user, comprising the steps:
verifying the integrity of the first digital signature; and
and generating a second digital signature for association with the first digital signature according to the method of any of claims 17 to 21 using a secret of the second user for generation of the second digital signature.

## Patentansprüche

1. Ein System zum digitalen Unterzeichnen eines Dokuments, das folgende Merkmale umfasst:
einen Rahmenpufferspeicher (315);
eine Einrichtung (500) zum Erzeugen von Bilddaten, die ein Dokument (505) darstellen, und Speichern der Bilddaten in dem Rahmenpufferspeicher (315);
eine Einrichtung (320) zum Lesen der Bilddaten von dem Rahmenpufferspeicher (315) und zum Erzeugen von anzeigbaren Bilddaten zum Weiterleiten an eine Anzeigeeinrichtung; und
eine Einrichtung (300, 520) zum Lesen der Bilddaten von dem Rahmenpufferspeicher (315) und zum Erzeugen einer digitalen Signatur für die Zuordnung zu dem Dokument (505), das durch die Bilddaten dargestellt wird.

2. Ein System gemäß Anspruch 1, das ferner eine Hauptverarbeitungseinrichtung (200) zum Erzeugen von Graphiksignalen zum Anzeigen des Dokuments und eine Anzeigeeinrichtung (105) zum Anzeigen von anzeigbaren Bilddaten umfasst, wobei die Einrichtung (320) zum Erzeugen von Bilddaten angepasst ist, um dies auf der Basis von Graphiksignalen durchzuführen, die durch die Hauptverarbeitungseinrichtung (200) erzeugt werden, und wobei die Einrichtung (320) zum Lesen der Bilddaten von dem Rahmenpufferspeicher angepasst ist, um die Bilddaten in Signale umzuwandeln, die geeignet sind zum Anzeigen eines tatsächlichen Bildes derselben auf der Anzeigeeinrichtung, und zum Weiterleiten dieser Signale an die Anzeigeeinrichtung (105) als anzeigbare Bilddaten.

3. Ein Datenverarbeitungssystem gemäß Anspruch 1 oder Anspruch 2, das ferner ein entfernbares Token (122) umfasst, das eine Verarbeitungseinrichtung (400) zum Empfangen der Bilddaten oder einer Darstellung derselben und zum Erzeugen einer jeweiligen digitalen Signatur umfasst.

4. Ein System gemäß Anspruch 2 oder Anspruch 3, das ferner eine Hauptspeichereinrichtung (205) zum Speichern eines Dokuments, das digital zu unterzeichnen ist, eine Einrichtung (110, 115, 500) zum Erzeugen eines Anforderungssignals für das Dokument (505), das digital zu unterzeichnen ist, umfasst, und wobei die Einrichtung (300, 520) zum Erzeugen einer digitalen Signatur für die Zuordnung zu dem Dokument, das durch die Bilddaten dargestellt wird, in einer vertrauenswürdigen Komponente (260) enthalten ist, die eine unabhängige Verarbeitungseinrichtung (300) umfasst, die angepasst ist, um beim Empfangen des Anforderungssignals eine digitale Signatur zu erzeugen, die einem Benutzer zugeordnet ist, und wobei der Rahmenpufferspeicher (315), die Einrichtung (320) zum Lesen von Bilddaten und zum Erzeugen von anzeigbaren Bilddaten und die Anzeigeeinrichtung (105) zusammen ein Anzeigesystem umfassen.

5. Ein System gemäß Anspruch 4, bei dem die vertrauenswürdige Komponente (260) eine Einrichtung (520) zum Verweigern von Schreibzugriff für jede unbefugte Anwendung oder jeden unbefugten Prozess auf zumindest den Abschnitt des Rahmenpufferspeichers (315), der die Bilddaten des Dokuments enthält, und eine Einrichtung (520) zum Erzeugen einer digitalen Signatur für die Zuordnung zu den Bilddaten umfasst, während der jeweilige Abschnitt des Rahmenpufferspeichers (315) nicht zugreifbar ist zum Schreiben von Daten.

6. Ein System gemäß Anspruch 4, bei dem die vertrauenswürdige Komponente (260) ferner eine Einrichtung zum Erfassen und/oder Erzeugen von vertrauenswürdigen Bilddaten, und eine Einrichtung zum Steuern des Anzeigesystems umfasst, um das angezeigte Dokumentenbild unter Verwendung der vertrauenswürdigen Bilddaten zu markieren.

7. Ein System gemäß Anspruch 6, bei dem die vertrauenswürdigen Bilddaten Pixmap-Daten umfassen, die das vertrauenswürdige Bild oder Befehle zum Bilden des vertrauenswürdigen Bildes darstellen.

8. Ein System gemäß Anspruch 6 oder Anspruch 7, bei dem die vertrauenswürdige Komponente (260) das Anzeigesystem steuert, um das angezeigte Dokumentbild durch Erzeugen von einem oder mehreren der folgenden visuellen Effekte zu markieren:
eine Grenze, oder ein Indikator oder Indikatoren, die eine Grenze definieren, **gekennzeichnet durch** das vertrauenswürdige Bild und zumindest teilweise um das Dokumentenbild herum positioniert;
ein Hintergrundmuster, das **dadurch gekennzeichnet ist**, dass das vertrauenswürdige Bild zumindest einen Teil des Hintergrunds des Dokumentenbilds bildet;
ein Bild, das **dadurch gekennzeichnet ist**, dass das vertrauenswürdige Bild in dem Dokumentenbild gebildet ist; und/oder
eine Textmitteilung, die **dadurch gekennzeichnet ist**, dass das vertrauenswürdige Bild in oder nahe dem Dokumentenbild gebildet ist.

9. Ein System gemäß einem der Ansprüche 6 bis 8, bei dem die vertrauenswürdige Komponente (260) eine Einrichtung zum Erfassen und/oder Erzeugen von vertrauenswürdigen Bilddaten von einem entfernbaren Token (122) umfasst.

10. Ein System gemäß Anspruch 4, bei dem die vertrauenswürdige Komponente (260) ferner eine Einrichtung zum Steuern des Anzeigesystems umfasst, um Mitteilungen für einen Benutzer anzuzeigen.

11. Ein System gemäß Anspruch 10, das ferner eine vertrauenswürdige Eingabeeinrichtung umfasst, durch die ein Benutzer auf eine sichere Weise auf Mitteilungen antworten kann.

12. Ein System gemäß Anspruch 11, bei dem die vertrauenswürdige Eingabeeinrichtung einen Schalter (135) umfasst, der über einen sicheren Kommunikationskanal mit der vertrauenswürdigen Komponente (260) verbunden ist.

13. Ein System gemäß Anspruch 3 oder Anspruch 9, bei dem die vertrauenswürdige Komponente (260) und das sichere Token (122) vor weiteren Interaktionen einen gegenseitigen Authentifizierungsprozess durchführen.

14. Ein System gemäß Anspruch 4, bei dem die vertrauenswürdige Komponente (260) einen integralen Teil des Anzeigesystems bildet.

15. Ein System gemäß Anspruch 14, bei dem das Anzeigesystem angeordnet ist, so dass die vertrauenswürdige Komponente (260) physikalisch und funktional zwischen der Hauptverarbeitungseinrichtung (200) und dem Rahmenpufferspeicher (315) positioniert ist, so dass die Hauptverarbeitungseinrichtung (200) auf den Rahmenpufferspeicher (315) nur indirekt durch Funktionen der vertrauenswürdigen Komponente zugreifen kann.

16. Ein System gemäß einem der vorhergehenden Ansprüche, das ferner eine Einrichtung zum Erzeugen von Daten umfasst, die eine digitale Signaturoperation zusammenfassen.

17. Ein Verfahren zum digitalen Unterzeichnen eines Dokuments, das folgende Schritte umfasst:
Erzeugen digitaler Bilddaten des Dokuments (505) und Aktualisieren der digitalen Bilddaten in einem Rahmenpufferspeicher (315);
Lesen der digitalen Bilddaten von dem Rahmenpufferspeicher (315), Umwandeln der digitalen Bilddaten in Signale, die zum Treiben einer visuellen Anzeigeeinrichtung geeignet sind, und Übertragen der Signale an eine visuelle Anzeigeeinrichtung (105) zum Anzeigen eines Bildes des Dokuments; und
nach Bedarf, Lesen der digitalen Bilddaten von dem Rahmenpufferspeicher (315) und Erzeugen einer digitalen Signatur für die Zuordnung zu dem Dokument, wie es angezeigt ist.

18. Ein Verfahren gemäß Anspruch 17, das ferner den Schritt (604) des vorübergehenden Verweigerns von Schreibzugriff auf den Rahmenpufferspeicher (315) durch unbefugte Prozesse umfasst, während die digitale Signatur erzeugt wird.

19. Ein Verfahren gemäß Anspruch 17 und Anspruch 18, das ferner den Schritt des Erfassens und/oder Erzeugens von vertrauenswürdigen Bilddaten und des Verwendens der vertrauenswürdigen Bilddaten zum Markieren des Dokumentenbilds umfasst.

20. Ein Verfahren gemäß Anspruch 19, bei dem der Schritt des Markierens des Dokumentenbildes erreicht wird durch Erzeugen von einem oder mehreren der folgenden visuellen Effekte:
eine Grenze, oder ein Indikator oder Indikatoren, die eine Grenze definieren, **gekennzeichnet durch** das vertrauenswürdige Bild und zumindest teilweise um das Dokumentenbild herum positioniert;
ein Hintergrundmuster, das **dadurch gekennzeichnet ist**, dass das vertrauenswürdige Bild zumindest einen Teil des Hintergrunds des Dokumentenbilds bildet;
ein Bild, das **dadurch gekennzeichnet ist**, dass das vertrauenswürdige Bild in dem Dokumentenbild gebildet ist; und/oder
eine Textmitteilung, die **dadurch gekennzeichnet ist**, dass das vertrauenswürdige Bild in oder nahe dem Dokumentenbild gebildet ist.

21. Ein Verfahren gemäß Anspruch 19 oder Anspruch 20, bei dem die vertrauenswürdigen Bilddaten von einem entfernbaren Token (122) erfasst werden.

22. Ein Datenverarbeitungssystem, das angeordnet ist, um ein Dokument gemäß dem Verfahren gemäß einem der Ansprüche 17 bis 21 digital zu unterzeichnen.

23. Ein Verfahren zum digitalen Unterzeichnen eines Dokuments, das eine Mehrzahl von einzelnen sichtbaren Seiten umfasst, das folgende Schritte umfasst:
für jede der einzelnen sichtbaren Seiten, Erzeugen einer digitalen Signatur für die Zuordnung zu der Seite gemäß dem Verfahren gemäß einem der Ansprüche 17 bis 21; und
Erzeugen einer weiteren digitalen Signatur für die Zuordnung zu den digitalen Signaturen aller einzelnen sichtbaren Seiten.

24. Ein Verfahren für einen zweiten Benutzer zum digitalen Gegenzeichnen eines Dokuments, das bereits durch einen ersten Benutzer unterzeichnet wurde, wobei dem Dokument eine jeweilige erste digitale Signatur beigefügt ist, die durch Verwenden eines Geheimnisses des ersten Benutzers erzeugt wird, wobei das Verfahren folgende Schritte umfasst:
Verifizieren der Integrität der ersten digitalen Signatur; und
Erzeugen einer zweiten digitalen Signatur für die Zuordnung zu dem Dokument gemäß dem Verfahren gemäß einem der Ansprüche 17 bis 21 unter Verwendung eines Geheimnisses des zweiten Benutzers für die Erzeugung der zweiten digitalen Signatur.

25. Ein Verfahren für einen zweiten Benutzer zum digitalen erneuten Unterzeichnen eines Dokuments, das bereits durch einen ersten Benutzer unterzeichnet wurde, wobei dem Dokument eine jeweilige erste digitale Signatur beigefügt ist, die durch Verwenden eines Geheimnisses des ersten Benutzers erzeugt wird, wobei das Verfahren folgende Schritte umfasst:
Verifizieren der Integrität der ersten digitalen Signatur; und
Erzeugen einer zweiten digitalen Signatur für die Zuordnung zu der ersten digitalen Signatur gemäß dem Verfahren gemäß einem der Ansprüche 17 bis 21 unter Verwendung eines Geheimnisses des zweiten Benutzers für die Erzeugung der zweiten digitalen Signatur.

## Revendications

1. Système pour signer numériquement un document, comprenant :
■ une mémoire tampon d'image (315) ;
■ des moyens (500) pour générer des données d'image représentatives d'un document (505) et mémoriser les données d'image dans la mémoire tampon d'image (315) ;
■ des moyens (320) pour lire les données d'image dans la mémoire tampon d'image (315) et pour générer des données d'image affichables pour un réacheminement vers des moyens d'affichage ; et
■ des moyens (300, 520) pour lire les données d'image dans la mémoire tampon d'image (315) et pour générer une signature numérique pour une association avec le document (505) dont les données d'image sont représentatives.

2. Système selon la revendication 1, comprenant en outre des moyens de traitement principal (200) pour générer des signaux graphiques pour afficher le document et des moyens d'affichage (105) pour afficher des données d'image affichables, moyennant quoi les moyens (320) pour générer des données d'image sont adaptés pour le faire sur la base des signaux graphiques générés par les moyens de traitement principal (200), et moyennant quoi les moyens (320) pour lire les données d'image dans la mémoire tampon d'image sont adaptés pour convertir les données d'image en des signaux appropriés pour afficher une image réelle de ceux-ci sur les moyens d'affichage et pour réacheminer ces signaux vers les moyens d'affichage (105) en tant que données d'image affichables.

3. Système de traitement de données selon la revendication 1 ou la revendication 2, comprenant en outre un jeton amovible (122) comprenant des moyens de traitement (400) pour recevoir les données d'image, ou une représentation de celles-ci, et pour générer une signature numérique respective.

4. Système selon la revendication 2 ou la revendication 3, comprenant en outre des moyens formant mémoire principale (205) pour mémoriser un document à signer numériquement, des moyens (110, 115, 500) pour générer un signal de demande pour le document (505) à signer numériquement, et dans lequel les moyens (300, 520) pour générer une signature numérique pour une association avec le document dont les données d'image sont représentatives sont compris dans un composant de confiance (260) comprenant des moyens de traitement indépendant (300) qui sont adaptés pour générer une signature numérique associée à un utilisateur lors de la réception du signal de demande, et dans lequel la mémoire tampon d'image (315), les moyens (320) pour lire les données d'image et pour générer des données d'image affichables et les moyens d'affichage (105) composent, ensemble, un système d'affichage.

5. Système selon la revendication 4, dans lequel le composant de confiance (260) comprend des moyens (520) pour refuser à toute application ou tout processus non autorisé un accès en écriture au moins à la partie de la mémoire tampon d'image (315) contenant les données d'image du document, et des moyens (520) pour générer une signature numérique pour une association avec les données d'image alors que la partie respective de la mémoire tampon d'image (315) n'est pas accessible pour une écriture des données.

6. Système selon la revendication 4, dans lequel le composant de confiance (260) comprend en outre des moyens pour acquérir et/ou générer des données d'image de confiance et des moyens pour commander le système d'affichage pour mettre en évidence l'image de document affichée en utilisant les données d'image de confiance.

7. Système selon la revendication 6, dans lequel les données d'image de confiance comprennent des données pixmap représentatives de l'image de confiance ou des instructions pour former l'image de confiance.

8. Système selon la revendication 6 ou la revendication 7, dans lequel le composant de confiance (260) commande le système d'affichage pour mettre en évidence l'image de document affichée en produisant un ou plusieurs des effets visuels suivants :
■ un cadre, ou un indicateur ou des indicateurs définissant un cadre, **caractérisé par** l'image de confiance et positionné au moins partiellement autour de l'image de document ;
■ un motif d'arrière-plan **caractérisé par** l'image de confiance formant au moins une partie de l'arrière-plan de l'image de document ;
■ une image **caractérisée par** l'image de confiance formée dans l'image de document ; et/ou
■ un message textuel **caractérisé par** l'image de confiance formé dans l'image de document ou à proximité de celle-ci.

9. Système selon l'une quelconque des revendications 6 à 8, dans lequel le composant de confiance (260) comprend des moyens pour acquérir et/ou générer des données d'image de confiance à partir d'un jeton amovible (122).

10. Système selon la revendication 4, dans lequel le composant de confiance (260) comprend en outre des moyens pour commander le système d'affichage pour afficher des messages à un utilisateur.

11. Système selon la revendication 10, comprenant en outre des moyens d'entrée de confiance par lesquels un utilisateur peut répondre à des messages d'une manière sécurisée.

12. Système selon la revendication 11, dans lequel les moyens d'entrée de confiance comprennent un commutateur (135) connecté au composant de confiance (260) par l'intermédiaire d'un canal de communication sécurisé.

13. Système selon la revendication 3 ou la revendication 9, dans lequel le composant de confiance (260) et le jeton sécurisé (122) promulguent un processus d'authentification mutuelle avant d'autres interactions.

14. Système selon la revendication 4, dans lequel le composant de confiance (260) fait partie intégrante du système d'affichage.

15. Système selon la revendication 14, dans lequel le système d'affichage est agencé de sorte que le composant de confiance (260) soit physiquement et fonctionnellement positionné entre les moyens de traitement principal (200) et la mémoire tampon d'image (315), de sorte que les moyens de traitement principal (200) ne peuvent accéder à la mémoire tampon d'image (315) qu'indirectement par l'intermédiaire des fonctions du composant de confiance.

16. Système selon l'une quelconque des revendications précédentes, comprenant en outre des moyens pour générer des données récapitulant une opération de signature numérique.

17. Procédé pour signer numériquement un document, comprenant les étapes consistant à :
■ générer des données d'image numérique du document (505) et mettre à jour les données d'image numérique dans une mémoire tampon d'image (315) ;
■ lire les données d'image numérique dans la mémoire tampon d'image (315), convertir les données d'image numérique en des signaux appropriés pour commander des moyens d'affichage visuels et transmettre les signaux à des moyens d'affichage visuels (105) pour afficher une image du document ; et
■ lire, à la demande, les données d'image numérique dans la mémoire tampon d'image (315) et générer une signature numérique pour une association avec le document tel qu'affiché.

18. Procédé selon la revendication 17, comprenant en outre l'étape (604) de refus temporaire d'un accès en écriture à la mémoire tampon d'image (315) par des processus non autorisés pendant la génération de la signature numérique.

19. Procédé selon la revendication 17 ou la revendication 18, comprenant en outre l'étape d'acquisition et/ou de génération de données d'image de confiance et d'utilisation des données d'image de confiance pour mettre en évidence l'image de document.

20. Procédé selon la revendication 19, dans lequel l'étape de mise en évidence de l'image de document est réalisée en générant l'un quelconque ou plusieurs des effets visuels suivants :
■ un cadre, ou un indicateur ou des indicateurs définissant un cadre, **caractérisé par** l'image de confiance et positionné au moins partiellement autour de l'image de document ;
■ un motif d'arrière-plan **caractérisé par** l'image de confiance formant au moins une partie de l'arrière-plan de l'image de document ;
■ une image **caractérisée par** l'image de confiance formée dans l'image de document ; et/ou
■ un message textuel **caractérisé par** l'image de confiance formé dans l'image de document ou à proximité de celle-ci.

21. Procédé selon la revendication 19 ou la revendication 20, dans lequel les données d'image de confiance sont acquises à partir d'un jeton amovible (122).

22. Système de traitement de données agencé pour signer numériquement un document selon le procédé de l'une quelconque des revendications 17 à 21.

23. Procédé pour signer numériquement un document, comprenant une pluralité de pages visualisables individuelles comprenant les étapes consistant à :
■ générer, pour chacune desdites pages visualisables individuelles, une signature numérique pour une association avec la page selon le procédé de l'une quelconque des revendications 17 à 21 ; et
■ générer une autre signature numérique pour une association avec les signatures numériques de toutes les pages visualisables individuelles.

24. Procédé pour qu'un deuxième utilisateur contresigne numériquement un document qui a déjà été signé par un premier utilisateur, le document étant accompagné d'une première signature numérique respective générée en utilisant un secret du premier utilisateur, comprenant les étapes consistant à :
■ vérifier l'intégrité de la première signature numérique ; et
■ générer une deuxième signature numérique pour une association avec le document selon le procédé de l'une quelconque des revendications 17 à 21 en utilisant un secret du deuxième utilisateur pour la génération de la deuxième signature numérique.

25. Procédé pour qu'un deuxième utilisateur resigne numériquement un document qui a déjà été signé par un premier utilisateur, le document étant accompagné d'une première signature numérique respective générée en utilisant un secret du premier utilisateur, comprenant les étapes consistant à :
■ vérifier l'intégrité de la première signature numérique ; et
■ générer une deuxième signature numérique pour une association avec la première signature numérique selon le procédé de l'une quelconque des revendications 17 à 21 en utilisant un secret du deuxième utilisateur pour la génération de la deuxième signature numérique.
